# EUROPEAN PATENT APPLICATION

(11) **EP 3 945 127 A1**
(43) Date of publication of application: **02.02.2022**
(21) Application number: 20187897.2
(22) Date of filing: 27.07.2020
(51) Int. Cl.: C12C 12/04, C12H 3/02, B01D 3/10

(54) **PLANT FOR REDUCING THE ALCOHOL CONTENT IN A BEVERAGE**

(71) Applicant: Api Schmidt-Bretten Gmbh&co. Kg, 75015 Bretten (DE)
(72) Inventor: TEUBER, Wilfried, 75033 Gondelsheim (DE)
(74) Representative: Mammel und Maser

(57) **Abstract**

The invention relates to a plant for reducing an alcohol content in a beverage, with at least one degasser (30), to which the alcohol-containing beverage can be supplied from a storage container, with a rectifier (23), which comprises a first column (31) and a second column (29), which are arranged separately and spatially adjacent to one another, with a line (26) branching off a bottom (24) of the second column (29), which leads to a separator (14), from which a reduced-alcohol beverage can be led out of the plant (10) via an outlet line (16) or fed to a collecting container (21), having a condenser (34) which is connected downstream of the rectifier (23), having a first vapour line (22) which is connected by an inlet (65) to the separator (14) and by an outlet (61) to the second column (29), with a second vapour line (33), which is connected with an inlet (65) to the first column (31) and with an outlet (61) to the condenser (34), and with a third vapour line (87), which is connected with an inlet (65) to the second column (39) and with an outlet (61) to the first column (31), wherein at least two of the components comprise the separator (14), the second column (29), the first column (33) and/or the condenser (34) are aligned in series along a common axis (55), and that the inlet (65) and/or the outlet (61) of at least one of the vapour lines (22, 33, 87) is positioned outside the common axis (55) on at least two of the components comprising the separator (14), the second column (29), the first column (33) and/or the condenser (34). (See Figure 5)

## Description

The invention concerns a plant for reducing the alcohol content in a beverage.

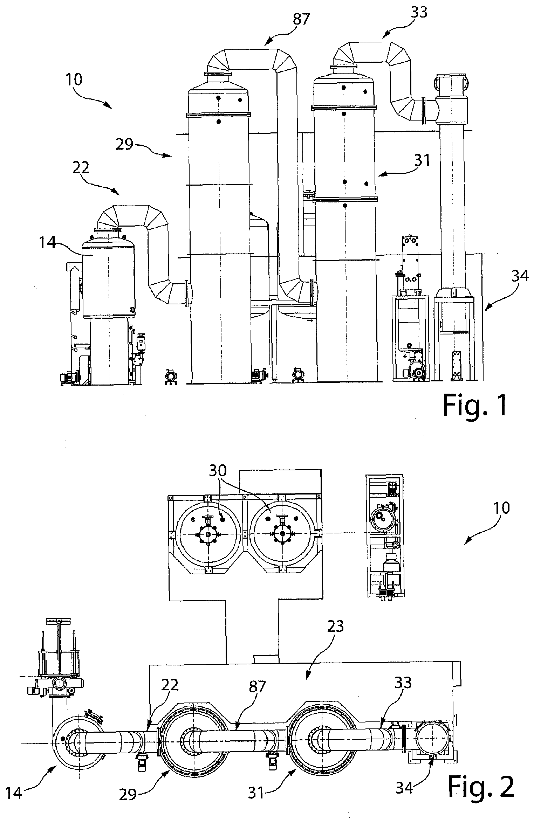

From DE 38 43 516 A1 such a plant for reducing the alcohol content in a beverage is known. The individual components of the plant and their arrangement are shown in a side view according to Figure 1 and a top view of the plant according to Figure 2.

This Plant 10 comprises at least one degasser 30, to which the alcoholic beverage is fed from a storage tank not further specified. The line leads from the degasser 30 to a rectifier 23, which comprises a first column 31 and a second column 29, which are spatially separated and aligned adjacent to each other. In addition, a separator 14 is provided, to which an alcohol-reduced beverage is fed via a line branching off at the bottom of the second column 29, which is not shown in detail, wherein this alcohol-reduced beverage first passes through a heat exchanger before it can be discharged from the separator 14 via an outlet line out of plant 10 or fed to a collecting vessel. The separator 14 is connected via a first vapour line 22 to the second column 29 of the rectification plant 23. A second vapour line 33 connects the first column 31 and the condenser 34. A third vapour line 87 is also provided which connects the first column 31 with the second column 29. The components comprising the separator 14, the second column 29, the first column 31 and the condenser 34 as well as the first, second and third vapour lines 22, 33, 37 are arranged in a common axis and are arranged in a row, as shown in particular in the plan view in Figure 2.

Such an arrangement of the plant 10 requires a building of considerable length with regard to the arrangement of the components separator 14, second column 29, first column 31 and condenser 34 and the vapour lines 22, 33, 87 running between them.

The invention is based on the task of creating a plant for reducing an alcohol content in a beverage, in which a smaller plant area for such a plant is made possible.

This task is solved by a plant for reducing an alcohol content in a beverage, in which at least two of the components comprising the separator, the second column, the first column and/or the condenser are aligned along a common axis and the inlet and/or the outlet of at least one vapour line between two of the components is positioned outside the common axis at the at least two of the components comprising the separator, the second column, the first column and/or the condenser. This arrangement allows at least two of the components comprising the separator, the second column, the first column and/or the condenser to be positioned at a reduced distance along the common axis compared to the state of the art. This allows a considerable reduction in the length of the at least two components comprising the separator, the second column, the first column and/or the condenser to be arranged at a reduced distance along the common axis compared to the state of the art. For example, a length of more than 10 metres, as is the case with the state of the art, can be reduced to a length of less than 10 metres.

Preferably, at least two of the components comprising the separator, the second column, the first column and/or the condenser are arranged upright with a vertical axis and the at least two vertical axes crossing the common axis. The existing arrangement of the components allows them to be assembled with a small distance between them.

Furthermore, it is preferably provided that at least three of the components comprising the separator, the second column, the first column and/or the condenser are located in the common axis. Alternatively, the separator, the second column, the first column and the condenser may be located on the common axis. The more components of the plant are positioned side by side in the common axis, the greater the space saving and reduction in length of the plant.

Preferably, the vapour line should have an inlet and an outlet and, in a view from above of the plant, the vapour line should have a V-shaped course between the inlet and the outlet. This can result in both a shortening of the at least one vapour line, preferably all vapour lines, and a reduction in the distance between the components comprising the separator, the second column, the first column and/or the condenser.

A longitudinal central axis of the inlet and a longitudinal central axis of the outlet of at least one vapour line are preferably aligned at an angle between 45° and 135° to each other. An angle between 80° and 100° is preferably provided, in particular an angle of 90°. In this way, a space-saving arrangement can also be achieved in the width of the adjacent components between which the vapour lines extend.

It is advantageous that the at least one vapour line, in particular one which has a V-shaped course, has a first bend, preferably a 90° bend, on the inlet and a second bend, preferably a 90° bend, on the outlet. A distance tube may extend between the first and second bend. Compared to the state of the art, such a vapour line has the advantage that one bend can be saved, so that both a cost reduction in the production of the vapour line and a flow optimisation for the vapours is possible.

According to an alternative design of the at least one vapour line, it is intended that a U-shaped course is provided between the inlet and the outlet of the vapour line in a view of the plant from above. Such a design of the vapour line, which extends outside the common longitudinal axis of the at least two components, also enables a reduction in the plant length of the at least two components lined up next to each other.

In the case of the vapour line with a U-shaped course, it is preferable that the inlet and the outlet are aligned parallel to each other. This can facilitate simple manufacture.

In particular, the at least one vapour line with the U-shaped course is provided with the inlet and the outlet between two of the components comprising the separator, the second column, the first column and/or the condenser being aligned at an angle of 90° to the common axis of the components.

The inlet and the outlet of the at least one vapour line is preferably connected in radial direction to a cylindrical wall section of the component set up with a vertical longitudinal axis comprising the separator, the second column, the first column and/or the condenser. This also allows a reduction in the height of the plant. Furthermore, a shortening of the respective vapour line can be made possible.

It is advantageous that the inlet and the outlet of the at least one vapour line have a connecting flange for mounting on at least two of the components comprising the separator, the second column, the first column and/or the condenser. This enables a simplification in the construction of the at least one vapour line as well as in the assembly.

According to a further preferred design of the invention, it is provided that at least one of the vapour lines, preferably the first vapour line, has an inlet which is connectable to a flanged connection piece lying in a vertical longitudinal axis of the separator, the second column and/or the first column and has an outlet oriented in a radial direction for connection to the cylindrical wall section of the second column, the first column and/or the condenser. A reversed arrangement is also possible. Since the height of the separator is less than that of the second column, a vertical arrangement of the inlet can be possible without increased height requirements.

Furthermore, it is preferably provided that the at least one further vapour line, in particular the second and the third vapour line, each have an inlet and an outlet which can be connected to radially aligned flanged connection pieces of the second column, the first column and the condenser, these flanged connection pieces being aligned outside the common axis in each case.

The invention as well as other advantageous forms of execution and further training of the same are described and explained in more detail below on the basis of the examples shown in the drawings. The features to be taken from the description and the drawings can be applied individually on their own or in any combination in accordance with the invention. It is shown:
Figure 1 a schematic side view of a plant for reducing the alcoholic content of a beverage in accordance with the state of the art,
Figure 2 a schematic top view of the plant according to the state of the art in Figure 1,
Figure 3 a circuit diagram of the plant for reducing an alcohol content in a beverage,
Figure 4 a schematic side view of the plant as shown in Figure 3,
Figure 5 a schematic top view of the plant as shown in Figure 4, and
Figure 6 another schematic side view of the plant as shown in Figure 4.

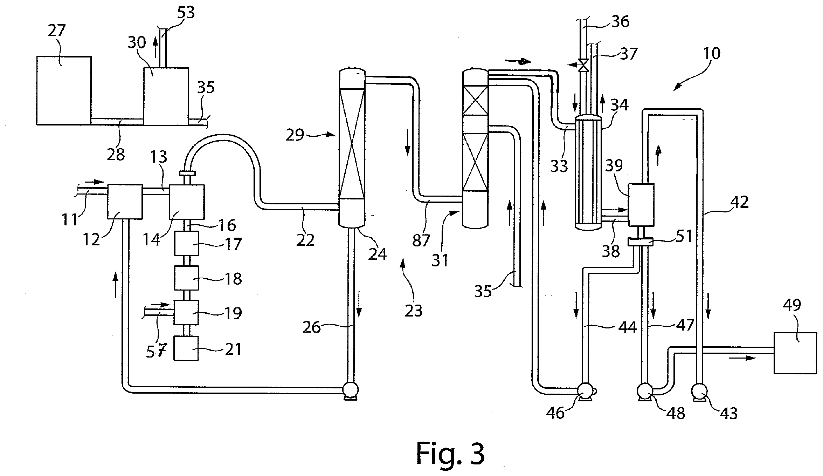

Figure 3 shows a schematic representation of an inventive plant 10 for reducing the alcohol content of a beverage. Steam with a temperature of, for example, 110 °C is fed via a line 11 to a heat exchanger 12, the first circuit of which, in which this heat exchanger 12 is integrated, is not shown in detail. In the second circuit of heat exchanger 12 a line 13 is provided which leads to a separator 14. From the bottom of the separator 14 a pipe 16 emerges, which discharges the non-alcoholic beverage. The non-alcoholic beverage is preferably wine, sparkling wine or beer. In the outlet line 16 there is a heat exchanger 17, which cools down the temperature of the finished product and serves the heat economy. In addition, outlet line 16 contains a cooler 18 which cools the finished product down to 5 °C, for example. Finally, an inoculation station 19 follows, to which flavouring substances such as CO2, fragrances and/or aromatic substances are fed, which are separated by fraction recovery from vapours of the alcoholic beverage. Through the injection station 19 the flavouring substances are discharged in doses into the outlet line 16 and mixed into the alcoholic beverage. Downstream of the inoculation station 19 there is a collecting container 21 for receiving the finished product, i.e. the reduced-alcohol beverage.

The term "reduced-alcohol drink" also includes drinks in which the alcohol contained in the drink is reduced to such an extent that these drinks are described as dealcoholised or non-alcoholic and may in particular also contain 0.0% alcohol.

From the head of the separator 14, a first vapour line 22 leads the warm, non-separated vapours to a lower area of a rectifier 23. This rectifier 23 comprises a second column or lower column 29. From the bottom 24 of the rectifier 23, a line 26 leads to the heat exchanger 12. This closes this circuit in which the reduced-alcohol beverage is led.

In a storage container 27 the alcoholic beverage is stored, which is to be reduced in alcohol content. A line 28 leads from the storage tank 27 to a degasser 30, in which fractional substances, especially CO2, are discharged via a line 53. These fractional substances can be fed to a fractional substance recovery device 58, in order to feed the fractional substances to the inoculation station 19 via a line 57 leading away from it. From the degasser 30, line 35 leads to the second circuit of plant 10. The alcoholic beverage is fed via line 35 to the middle section of a first column 31 of the rectifier 23. A second vapour line 33 is provided at the upper end region of the rectifier 23 or at the head 32 of the rectifier 23, which discharges the vapours containing alcohol, flavour and/or aromas. The temperature in head 32 is, for example, 30 °C. This corresponds to approximately 44 mbar. The temperature in the rectifier 23 above the bottom 24 is, for example, 39 °C at a pressure of, for example, 70 mbar.

A third vapour line 87 is provided between the second column 29 and the first column 31.

In the steady state of rectifier 23, the second vapour line 33 discharges about 80 % of the alcohol, alcohol always being understood to be ethanol. The second vapour line 33 leads to a condenser 34, which is fed via a line 36 with coolant, in particular glycol. The coolant is discharged through one line 37. In the head of the condenser 34, the vapours fed to the condenser 34 may not yet condensed, which is why the vapours are fed to a separator 39 via a line 38. A vacuum line 42, which is connected to a vacuum pump 43 and which may in a first step also generates the vacuum present in the rectifier 23, leads into the head of the separator 39. From the bottom of the separator 39 there is a line 44 to a controller 51. A controller 51 can determine the volume ratio in lines 44 and 47 of the separator 39. The line 47 drains the alcohol not required for return via a pump 48 to an alcohol tank 49, which carries at least liquefied alcohol in liquid form, for example with a concentration not exceeding 82 %. The percentage may be between 20 % and 80 % depending on the dealcoholisation effort. The liquefied alcohol is fed via a pump 46 to the head 32 of the rectifier 23, in particular at a level no higher than the outlet of the second vapour line 33 above the first column 31.

When the plant is started up, line 47 initially remains closed until the alcohol content in lines 44, 33 and 38 has reached the desired level, for example 80%. A further increase in the alcohol content can be prevented by the controller 51 by releasing line 47, to the extent that it is ensured that it maintains the desired level on the alcohol percentage return path.

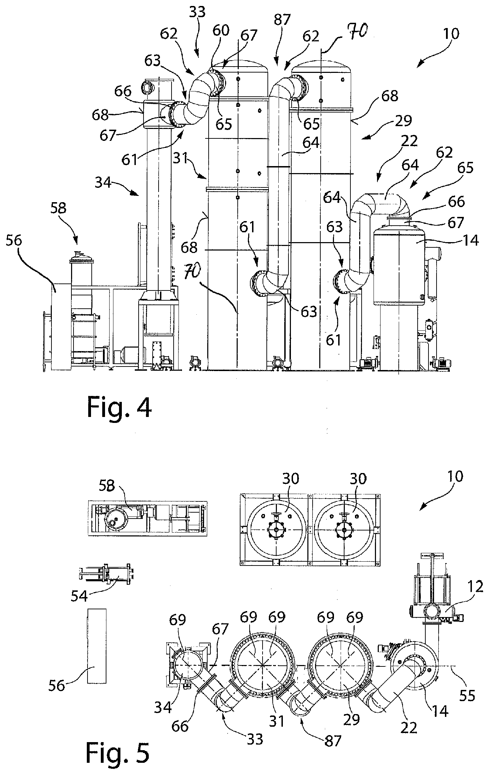

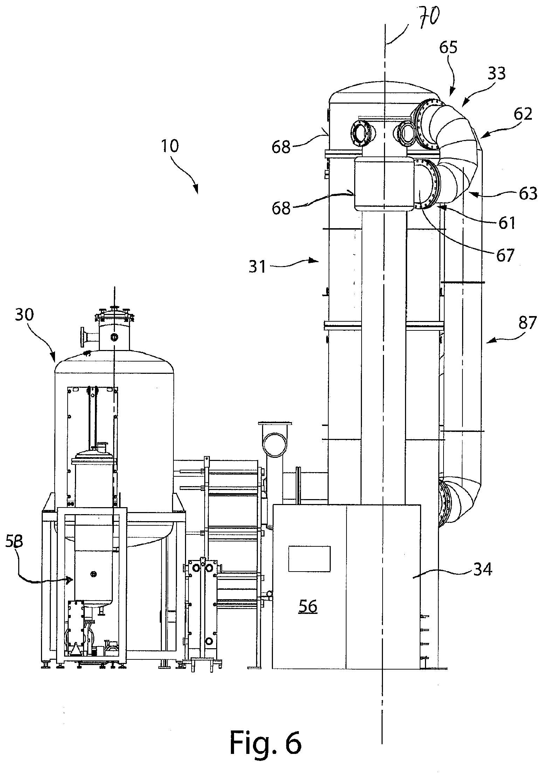

Figure 4 shows a schematic side view of components of plant 10 according to the plant description in Figure 3. Figure 5 shows the plant 10 according to Figure 4 from above and Figure 6 shows another side view of plant 10 according to Figure 4.

The plant 10 according to Figures 4 to 6 is simplified and show only the components described below. A large number of connecting cables, control cables and other connecting cables are not shown to maintain an overview.

It can be seen from Figure 4 and Figure 5 that the separator 14, the second column 29, the first column 31 and the condenser 34 are arranged on a common axis 55 and aligned with each other. The separator 14, the second column 29, the first column 31 and the condenser 34 are arranged upright and each have a vertical axis 70. This vertical axis 70 of the separator 14, the second column 29, the first column 31 and the condenser 34 intersect the common axis 55. The separator 14 is connected to the second column 29 via the first vapour line 22, the second column 29 is connected to the first column 31 via the third vapour line 87. The first column 31 is connected to the condenser 34 via the second vapour line 33.

In addition, Figures 4 to 6 show at least one degasser 30. In the design example, two degasser 30 are connected in parallel. Furthermore, as shown in Figure 5, a fractional substances recovery device 58 is shown. Vapours from the degasser 30 are fed to the fractional substance recovery device 58. The recovered fractional substances are proportionally added to the reduced-alcohol beverage via the inoculation station 19. In addition, an evaporator 54 and a control cabinet 56 are provided, as shown in the plan view in Figure 5. The heat exchanger 17 is shown schematically upstream of separator 14.

The first, second and third vapour lines 22, 33, 87 have a V-shaped course when viewed from above. This V-shaped course of the vapour lines 22, 33, 87 allows at least two of the components, preferably all of the components described below, namely the separator 14, the second column 29, the first column 31 and the condenser 34 to be arranged at a small distance from each other along the common axis 55. For example, the distance between two components is only 2 to 2.5 meters. For example, the distance between the components in plant 10 according to the state of the art, as shown in Figure 2, is between 2.7 and 3.5 metres. Due to this arrangement of the vapour lines 22, 33, 87 outside the common axis 55, a reduction in the space required for at least two of the components, the separator 14, the second column 29, the first column 31 and/or the condenser 34, preferably all components, may be possible.

The vapour lines 22, 33, 87 can all have the same structure. These comprise an inlet 65, followed by a first 90° bend 62. A second 90° bend 63 can be directly connected to the first 90° bend 62 or a distance pipe 64 can be provided in between. The second bend 63 is preferably followed by an outlet 61. In the second vapour line 33, the first and second 90° bend 62, 63 are directly adjacent. In the third vapour line 87, a distance tube 64 is inserted between the outlet 61 and the inlet 65 to compensate for the difference in height.

A connecting flange 66 is provided at outlet 61 and inlet 65. This connecting flange 66 can preferably be attached to a flange connection piece 67, especially by means of screw connections. This flange connection 67 is provided in radial direction on a cylindrical wall section 68 of at least two of the components comprising the separator 14, the second column 29, the first column 31 and the condenser 34. These flanged fittings 67 on the components can all be located outside the common axis 55. Preferably, the flanged fittings 67 between the second and first columns 29, 31 and between the first column and the condenser 34 are oriented at an angle, preferably 90°, with respect to the longitudinal centre axes. This allows the second and third vapour lines 87, 33 to be designed with a reduced number of bends 62, 63.

The first vapour line 22 can be provided in the same design as the second or third vapour line 33, 87. Alternatively, this first vapour line 22 can also be designed as shown in Figures 4 to 6. In this case, it is intended that the inlet 65 of the first vapour line 22 is not aligned in a radial direction to the separator 14, but lies on its vertical longitudinal axis 70 and is aligned vertically upwards. In this vapour line 22, an additional third bend is provided between the first and second bends 62, 63, whereby this arrangement also allows a V-shaped course of the first vapour line 22 when viewed from above.

Such a design of the first vapour line 22 can also be given for the second and/or third vapour line 33, 87, whereby the design of the second and third vapour lines 33, 87, as shown in Figure 4, allows a reduced overall height.

In the second and third vapour lines 33, 87, a longitudinal central axis 63 of the outlet 61 and the inlet 65 is aligned at a 45° angle to the common axis 55. It is advantageous that the flange connection pieces 67 arranged on the first and second columns 29, 33 are provided for connecting outlet 61 and inlet 65 respectively, offset by 45° to the common axis 55. The flanged connection pieces 67 on the second column 29 and first column 33 are thus offset by 90° and aligned with each other when viewed from above.

## Claims

1. Plant for reducing the alcohol content in a beverage,
- with at least one degasser (30), to which the alcoholic beverage is fed from a storage container (21),
- with a rectifier (23) comprising a first column (31) and a second column (29) which are arranged separately and spatially adjacent to one another,
- with a line (26) branching off from a bottom (24) of the second column (29) and leading to a separator (14), from which a reduced-alcohol beverage is taken out of the plant (10) via an outlet line (16) or fed to a collecting container (21),
- with a condenser (34) which is connected downstream of the rectifier (23),
- with a first vapour line (22), which is connected by an inlet (65) to the separator (14) and by an outlet (61) to the second column (29),
- with a second vapour line (33), which is connected by an inlet (65) to the first column (31) and by an outlet to the condenser (34), and
- with a third vapour line (87), which is connected by an inlet (65) to the second column (39) and by an outlet (61) to the first column (31),
**characterized in,**
- **that** at least two of the components comprising the separator (14), the second column (29), the first column (33) and/or the condenser (34) are aligned in series along a common axis (55), and
- **that** the inlet (65) and/or the outlet (61) of at least one of the vapour lines (22, 33, 87) is positioned outside the common axis (55) on at least two of the components comprising the separator (14), the second column (29), the first column (33) and/or the condenser (34).

2. Plant according to claim 1, **characterized in that** at least two of the components comprising the separator (14), the second column (29), the first column (33) and/or the condenser (34) are arranged upright with a vertical axis (70) and the vertical axes (70) cross the horizontal axis (55).

3. Plant according to claim 1 or 2, **characterized in that** at least three of the components comprising the separator (14), the second column (29), the first column (33) and/or the condenser (34) lies on the common axis (55), or **in that** the separator (14), the second column (29), the first column (33) and the condenser (34) lie on the common axis (55).

4. Plant according to one of the preceding claims, **characterized in that** the at least one vapour line (22, 33, 87) between the inlet (65) and the outlet (61) has a V-shaped course in a view from above of the plant (10).

5. Plant according to claim 4, **characterized in that** a longitudinal central axis (69) of the inlet (65) and a longitudinal central axis (69) of the outlet (61) are aligned at an angle between 45° and 135° to each other, preferably at an angle of 80° to 100°, in particular at an angle of 90°.

6. Plant according to one of the preceding claims, **characterized in that** the at least one vapour line (22, 33, 87) has, following the inlet (65), a first bend (62), preferably a 90° bend, and a second bend (63), preferably a 90° bend, opening into the outlet (61), and a distance tube (64) is preferably provided between the first and second bend (62, 63).

7. Plant according to one of claims 1 to 3, **characterised in that** at least one vapour line (22, 33, 87) between the inlet (65) and the outlet (61) has a U-shaped course in a view from above of the plant (10).

8. Plant according to claim 7, **characterised in that** in the U-shaped course of the at least one vapour line (22, 33, 87) the inlet (65) and the outlet (61) are aligned parallel to one another.

9. Plant according to claim 7 or 8, **characterized in that** the inlet (65) and the outlet (61) of the at least one vapour line (22, 33, 87) between two of the components comprising the separator (14), the second column (29), the first column (31) and/or the condenser (34) are aligned at an angle of 90° to the common axis (55).

10. Plant according to one of the preceding claims, **characterized in that** the inlet (65) and the outlet (61) of the at least one vapour line (22, 33, 87) are connected in radial direction to a cylindrical wall portion (68) of the at least two components aligned with the vertical longitudinal axis (69) comprising the separator (14), the second column (29), the first column (31) and/or the condenser (34).

11. Plant according to one of the preceding claims, **characterized in that** the inlet (65) and the outlet (61) of the at least one vapour line (22, 33, 87) has a connecting flange (66) for mounting on a flanged connecting piece (67) attached to the separator (14), the second column (29), the first column (31) and/or the condenser (34).

12. Plant according to one of the preceding claims, **characterized in that** at least one of the vapour lines (22, 33, 87), preferably the first vapour line (22), has an inlet (65) which is connected to a separator (14) arranged in the vertical axis (70) of the separator (14), the second column (29) and/or the first column (31) is connected to a flanged connection piece (67) lying on the second column (29) and/or the first column (31) and has an outlet (61) which is connected to a flanged connection piece (67), aligned in the radial direction, of the second column (29), the first column (31) and/or the condenser (34).

13. Plant according to one of the preceding claims, **characterized in that** at least one further of the vapour lines (22, 33, 87), in particular the second and third vapour lines (33, 87), each have an inlet (65) and an outlet (61), which are connected to radially aligned flanged connection pieces (67) of the second column (29), the first column (31) and the condenser (34), which lie outside the common axis (55).
